# EUROPEAN PATENT SPECIFICATION

(11) **EP 1 419 477 B1**
(45) Date of publication and mention of the grant of the patent: **24.02.2010**
(21) Application number: 02739054.1
(22) Date of filing: 24.06.2002
(51) Int. Cl.: G06F 3/033

(54) **HAND HELD DRAWING DEVICE CAPABLE OF COMPOSING AND TRANSMITTING ELECTRONIC MESSAGES**
HANDLICHES SCHREIBGERÄT MIT DER FÄHIGKEIT ZUM ZUSAMMENSTELLEN UND SENDEN ELEKTRONISCHER NACHRICHTEN
DISPOSITIF DE DESSIN TENANT DANS LA MAIN PERMETTANT DE COMPOSER ET DE TRANSMETTRE DES MESSAGES ELECTRONIQUES

(30) Priority: 28.06.2001 SE 0102294
(43) Date of publication of application: 19.05.2004
(73) Proprietor: Anoto AB, 227 22 Lund (SE)
(72) Inventor: WIEBE, Linus, S-222 24 Lund (SE); HÖGLIN, Per, S-172 75 Sundbyberg (SE); FÅHRAEUS, Christer, S-223 62 Lund (SE)
(74) Representative: Perklev, Karin Cecilia
(86) International application number: PCT/SE2002/001233
(87) International publication number: WO 2003/003288

(56) References cited:
- WO-A1-00/72244
- WO-A1-01/22208
- WO-A1-01/30589
- GB-A- 2 354 824
- DYMETMAN M; COPPERMAN M: 'Intelligent paper' LECTURE NOTES IN COMPUTER SCIENCE vol. 1375, March 1998, pages 392 - 406, XP002328425

## Description

### Technical Field

The present invention relates to a method for generating a message.

### Background to the Invention

E-mail systems of various types are used to a very great extent. The main reasons for the widespread use of these systems is that they make possible rapid and efficient written communication without being associated with high costs.

Known systems for e-mail management have, however, a number of limitations. An e-mail message that is generated in the normal way in a personal computer is, in general, restricted to containing text in the form of ASCII characters and in addition attached files, which can be of various types.

In addition, access to a personal computer of some type is normally assumed for the production of a message, which makes mobile use difficult. It is true that portable digital tools are available to a certain extent, in the form of mobile telephones and so-called PDAs, which can have e-mail applications, but users are then, in general, constrained to very limited display and entry functions, which complicates the creation of a message.

### Summary of the Invention

An object of the present invention is to solve the above-mentioned problem completely or partially.

The invention is defined by the claims.

Messages can thereby be completed in a drawing device, without access to a personal computer or a digital tool of the above-mentioned type. An input surface, which is almost the same size as a printed-out sheet of paper, can nevertheless be used. In addition, handwritten, more expressive messages can be created.

According to a preferred embodiment, the address parameter comprises at least information corresponding to an address in an e-mail system.

This enables a fully complete message to be created in the drawing device.

According to an alternative embodiment, the address parameter comprises at least a reference identity, that identifies an address in a server unit.

This enables the server unit to maintain information concerning relationships between different messages, for example the fact that a message constitutes a reply to another message.

According to a preferred embodiment, the message can be a reply to an incoming message, the address parameter corresponding to the address of at least the sender of the incoming message.

This makes it possible to reply to a message in a simple way.

Information in the incoming message can preferably also be printed out on the sheet of paper.

The user can thus print out the sheet of paper and later, also without access to a personal computer, read and reply to the incoming message.

In a preferred embodiment, the positional relationship on the sheet of paper between the information in the incoming message and the information sequence can be recorded. The information in the incoming message can thus be included in the generated message with said positional relationship retained.

This makes it possible for a user to write annotations directly in an incoming message.

In a preferred embodiment, the message can be intended to be sent to a selectable subset of a group of recipients, the identities of this group of recipients being printed out on the sheet of paper.

The user can thus simply choose to which potential recipients the message is to be sent.

The recorded address information and the information sequence can preferably be combined in the drawing device. Preferably, a number of such messages are stored in the drawing device and are subsequently sent, when the drawing device makes contact with a network.

The drawing device can thus store a number of completed messages as a stand-alone device and then send them when contact is made with a suitable network.

Alternatively, the recorded address information and the information sequence can be transmitted from the drawing device to a server unit, with the address information and the information sequence being combined in the server unit.

This enables the server unit to maintain information concerning relationships between different messages, for example the fact that one message constitutes a reply to another message.

The computer program and hence the storage medium have corresponding advantages to the method described above. In addition, they can be varied in similar ways to this.

Preferably, the sheet is printed in such a way, that it comprises a message box, containing the incoming message, and a reply box, in which the user is intended to write in order to generate the information sequence. In a preferred embodiment, the message box and the reply box are visually separated.

This facilitates the use of the method for the user.

Preferably, the positional relationship on the sheet of paper between the information in the incoming message and the information sequence is recorded and in which the information in the incoming message is included in the generated message with said positional relationship retained.

This allows a user to comment an incoming message in the text of this message and to send the commented message as a reply message.

In a preferred embodiment, additional information is sent to the printer unit, such that the printed sheet contains address parameters corresponding to other recipients of the incoming message.

This allows a user to create a reply message with multiple, selectable recipients.

Preferably, the printed sheet further comprises an address parameter corresponding to the sender of the incoming message as well as all other recipients of the incoming message.

This corresponds to a "reply-all"-option and facilitates the use of the printed sheet, for the user.

In a preferred embodiment, a mail client further comprises the instruction to combine the information sequence and the address parameter, upon receipt thereof from the drawing device, to form said electronic reply message including handwritten information.

This allows the completion of handwritten mail messages in a single unit, such as a personal computer.

Preferably, the mail client includes an instruction to send contents of the incoming electronic mail message to the printer unit, the printer unit thereby being controlled to also print out said contents on the sheet of paper.

This allows reading and responding to a message, using a single sheet of paper.

In a preferred embodiment, the mail client comprises the instructions to store said contents of the incoming electronic mail message in a memory associated with said device, and to retrieve, upon said receipt of the information sequence and the address parameter from the drawing device, said contents from the memory and combine said contents and the information sequence and the address parameter to form said electronic reply message including handwritten information. Preferably, it also comprises the instructions to associate the position-coding pattern with said contents of the incoming electronic mail message, to thereby control the printer unit to print out said contents in a given positional relationship to said position-coding pattern, and to combine said contents and the information sequence with said positional relationship retained.

This allows a reply message to include an annotation of the incoming message.

In a preferred embodiment, the mail client comprises the instruction to extract the address parameter from the incoming electronic mail message as received from the mail server. It preferably also comprises the instruction to send the information sequence and the address parameter, upon receipt thereof, to the mail server.

This allows the mail server to combine the message and thus to maintain relation between incoming and outgoing messages. This can be done even if the printout is initiated by a first client and the information sequence is received by a second client, which provides for enhanced mobility.

Preferably, the mail client further comprises the instruction to send contents of the incoming electronic mail message to the printer unit, the printer unit thereby being controlled to also print out said contents on the sheet of paper. This allows reading and responding to a message, using a single sheet of paper.

In a preferred embodiment, the mail client further comprises instructions to associate said position-coding pattern with said contents of the incoming electronic mail message, to thereby control the printer unit to print out said contents in a given positional relationship to said position-coding pattern, so that said information sequence is generated with said given positional relationship to said contents, and to send the information sequence to the mail server with said positional relationship retained. This allows, even if the message is completed in a mail server, a reply message to include an annotation of the incoming message.

In a preferred embodiment, the address parameter is a reference identity of the position-coding pattern to be printed on said the sheet of paper. The reference identity preferably corresponds to a range of positions coded by the position-coding pattern to be printed on the sheet of paper.

This allows the user to generate the message and record the address parameter simultaneously, which simplifies the use of the paper product.

Preferably, the address parameter is a reference identity that identifies said Internet mail address in the device or in the mail server. This entails a simple procedure, that may be easily implemented.

Preferably, the client according to the seventh aspect of the invention comprises the instruction to transmit contents of the incoming electronic mail message to the drawing device. This provides the drawing device with information regarding the incoming message, which information may be used when a reply message, generated with the drawing devices, is to be sent. This need not necessarily be done with the computer in which the mail client is running.

Preferably, the instruction to transmit comprises to send said contents to the printer unit, the printer unit thereby being controlled to also print out said contents on the sheet of paper in a format that the drawing device is capable of reading. This allows the drawing device to record information from the incoming message without communicating directly with the mail client.

Preferably, the address parameter comprises said Internet mail address. The printer unit may be controlled to write said Internet mail address in plain language on the sheet of paper. This entails a simple procedure, since, as long as the drawing device can perform Optical Character Recognition (OCR), it may itself determine the address.

Alternatively, the printer unit may be controlled to code said Internet mail address on said sheet of paper in a format that the drawing device is capable of reading. The drawing device then need not comprise OCR-software.

### Brief Description of the Drawings

Fig. 1 shows a situation in which a method according to an embodiment of the present invention is used.
Fig. 2 shows a flow chart for a method according to an embodiment of the present invention.
Fig. 3 shows a sheet of paper provided with coded address parameters according to embodiments of the present invention.
Fig. 4 shows an additional situation where a method according to an embodiment of the present invention is used.

### Description of Preferred Embodiments

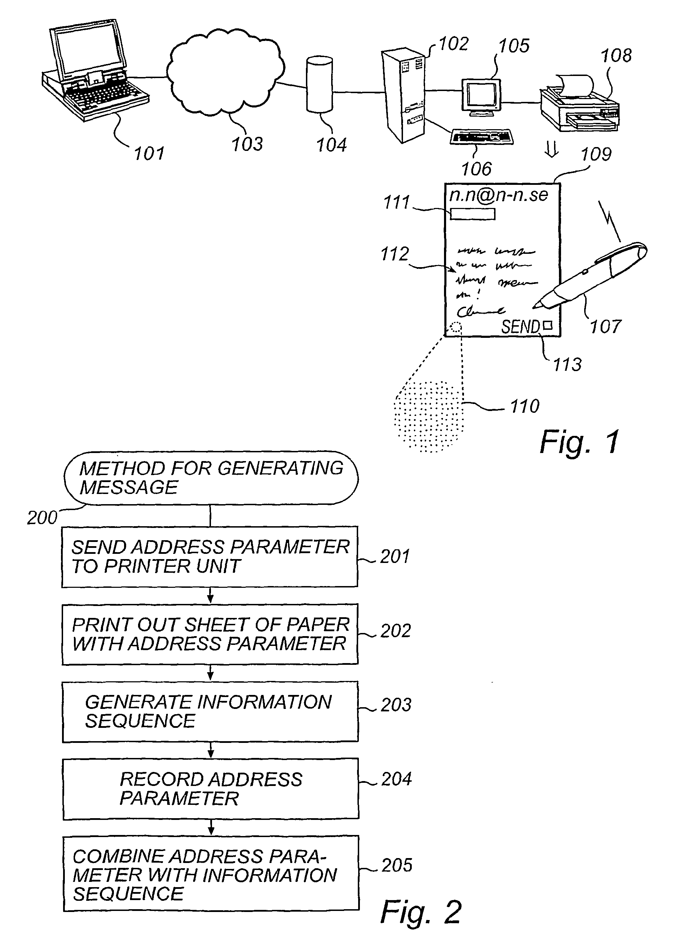

Fig. 1 shows a situation in which a method according to an embodiment of the invention is used. A first personal computer 101, that has access to an e-mail address "n.n@n-n.se" sends a message to a second personal computer 102 via the Internet 103 and an e-mail server 104. A receiving user can read the message and reply to this in a known way using a display 105 and a keyboard 106 which are connected to the second personal computer 102.

According to this embodiment of the present invention, a reply message is, however, to be produced using a drawing device 107 of the type described in WO 01/26033.

In this way, a handwritten, more expressive reply to a message can be generated and sent.

This procedure can be initiated by the user selecting a "handwritten reply" option in an interface of the e-mail program in the second personal computer 102, which received the message to which a reply is to be sent.

A method according to an embodiment of the invention comprises the following steps, which are also illustrated with reference to Fig. 2. In a first step 201, an address parameter that corresponds to the destination, that is an e-mail account associated with the first personal computer 101, is sent to a printer unit 108. The term address parameter will be described in greater detail below, but comprises, in this example, information that is sufficient to be able to identify the e-mail address associated with the first personal computer 101. In a second step 202, a sheet of paper 109 is printed out using the printer unit 108. The sheet of paper 109 comprises a position-coding pattern 110 (shown enlarged) and, in addition, the address parameter, coded in a field 111 on the surface of the sheet of paper 109. How the address parameter can be coded on the sheet of paper will be described in greater detail below. The original message can also be printed on the sheet of paper. The position-coding pattern can be pre-printed on the sheet of paper, or can be printed out at the same time as the address parameter is printed out.

In a third step 203, an information sequence is generated by the user writing with the drawing device 107 on the sheet of paper. The drawing device 107 is capable of detecting positions on the sheet of paper, by reading off the position-coding pattern optically. When the user writes a message 112 on the sheet of paper 109 using the drawing device 107, which is preferably provided with a drawing nib, an information sequence is thus recorded in the form of a series of position data, which constitutes a digital copy of the message that was written down.

In a fourth step 204, the address parameter 111 is recorded using the drawing device 107. This can be carried out optically, as will be shown below. In the example, the address parameter is recorded by the drawing device being passed over the field 111 in which the address parameter is coded. While carrying out this recording, the drawing device 107 in the example can derive the e-mail address "n.n@n-n.se", to which the message is intended to be sent.

In a fifth step 205, the recorded address parameter is combined with the information sequence into a message. This can be carried out when a "send" icon 113 on the sheet of paper 109 is marked, which means that positions in the icon 113 are detected by the drawing device 107, which is thereby informed that the information sequence 112 is completed. Thus, in the example, a reply message comprising an information sequence and an address has been generated. This reply message can now be sent by the drawing device 107, for example over a radio interface. The reply message can be sent via the second personal computer 102 which received the original message, but it is also possible, for example, to send the message directly from the drawing device 107 to the e-mail server 104. The drawing device 107 is preferably provided with a memory, which enables a plurality of messages to be completed in the drawing device 107 and then sent at a time when the user has access to, for example, a personal computer connected to the Internet.

The invention also relates to a computer program for printing out a sheet of paper as described above in connection with Fig. 2. The computer program contains instructions essentially corresponding to steps 201 and 202. Such a computer program can be stored on a digital storage medium.

By an address parameter is meant an address or other information that can be utilized to identify or derive an address.

In an embodiment of the invention, the address parameter can be an e-mail address, for example "n.n@n-n.se", as shown above. For other types of electronic message systems, other types of address are, of course, possible.

If the message that is to be generated is a reply to an incoming message, an identity number corresponding to the incoming message can also constitute an address parameter. The user then records the identity of the incoming message to which a reply is to be sent. The address that corresponds to the identity is obtained from the e-mail server 104 when the message is to be sent.

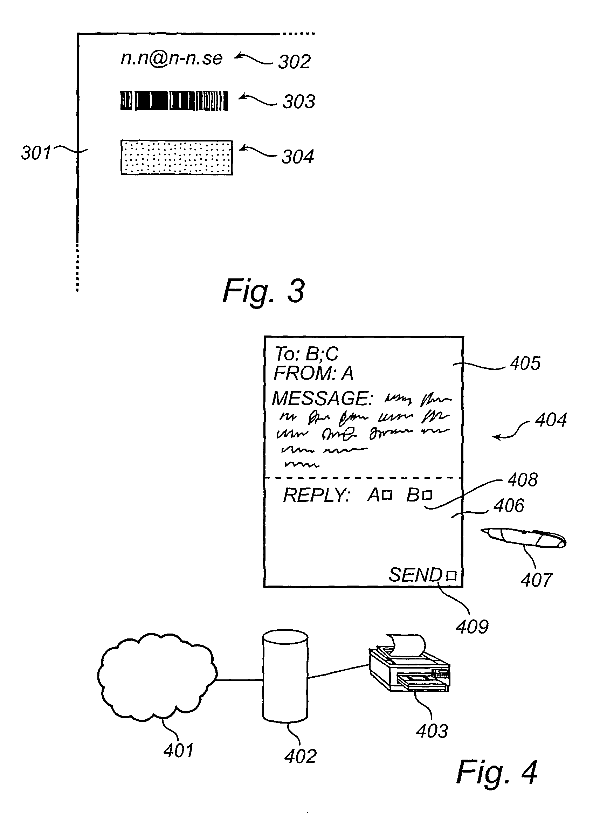

Fig. 3 shows different ways of coding an address parameter and printing this out on a sheet of paper 301, so that it can be recorded by a drawing device 107.

A first possibility is to print out the address parameter in clear text, as shown at 302. The drawing device 107 in Fig. 1 can then record this optically and utilize known OCR technology (OCR = Optical Character Recognition) for digital interpretation of the address parameter. The drawing device has then preferably a capability of recording text, which capability corresponds to that described in WO 98/20446.

A second possibility is to code the address parameter as a bar code 303. This provides, as a rule, a more reliable recording method than OCR interpretation.

An additional method is to code the address parameter in the position-coding pattern that can also be used for other purposes by the drawing device 107 in Fig. 1. This can be carried out by entering a position-coding pattern in a box 304, where the sequence of positions that is recorded when the drawing device 107 in Fig. 1 is passed over the box 304 can be interpreted as an address parameter by means of software. This can be achieved by a certain position being made to represent, for example, a particular alphanumeric character. This can also be carried out as shown in the application WO 01/71653.

Fig. 4 shows how an e-mail service that is independent of a PC can be designed according to an embodiment of the invention. A message is received from the Internet 401 by an e-mail server 402, which message is intended to be forwarded to a recipient. The message is forwarded to a printer unit 403 in the vicinity of the user. It can be predetermined to which printer the message is to be forwarded, but the choice of printer can also be carried out dynamically. Since drawing devices of the type mentioned earlier are normally allocated unique identity numbers, it is possible to address a message to a particular drawing device. It is thus possible to register the drawing device as belonging to a particular printer unit, but it is also possible to carry out paging of a drawing device if this is equipped with a radio interface. In such cases, a message can be printed out on the printer that is closest to the drawing device. In addition, the user of the drawing device can be made aware that a message has been sent to a printer unit in the vicinity by means of, for example, a sound signal from the drawing device.

A further possibility is to send the message to a mobile telephone. The user of the mobile telephone can thereafter, for example by means of a short-range radio interface, transfer the message to a printer unit that happens to be in the vicinity. It should be understood that the computer unit 102 shown in Fig. 1 as a personal computer can also be replaced by a mobile telephone which receives messages, for example via a packet data radio system such as GPRS, and which can communicate information to a printer unit, for example using a short-range radio interface such as BLUETOOTH. The functions in a mobile telephone can thus constitute a computer unit.

The selected printer unit 403 prints out the received message in a message box 405 on a sheet of paper 404. The user can thus read the message and is also given the ability to reply to this in a "reply" box 406 on the same sheet of paper 404 or on a separate sheet of paper. The user then uses a drawing device 407 of the type described above and writes his reply in the "reply" box 406, which is provided with a position-coding pattern (not shown) of the type described above. The reply is thereby recorded digitally in the drawing device 407 as a sequence of positions. The "reply" box 406 may be visually separated from the message box 405, for instance, as is illustrated in fig 4, by means of a dashed line.

If the received message is printed out on the sheet of paper that comprises a position-coding pattern, this makes it possible to annotate the text in the original message as shown by an example in the application WO 01/71475.

The address parameter consists in this case preferably of an identity reference, that identifies the original message in an e-mail server. The user writes annotations in the original text. The message written by the user is recorded as a sequence of positions. The e-mail server can combine the original message with the message written by the user, so that the latter becomes annotations on the former. The positional relationship between the original message and the text written by the user must then also be recorded. This can be carried out by the original message being printed out in a predetermined way or by the way in which the original message is printed out being communicated to the e-mail server. The original message with annotations can thereafter be sent back to the sender of the original message and/or to other recipients.

The user also records at least one printed-out address parameter 408. It can be an address parameter corresponding to the sender of the original message or an address parameter corresponding to another of the recipients of the original message. It can also be an address parameter corresponding to a group of recipients, for example "reply to all".

When the message is complete and the choice of recipient for it has been made, the user marks a "send" icon 409, which indicates to the drawing device 407 (for example by recording special positions in the icon) that the message is ready. It is then sent to its recipient(s). This can be carried out by radio communication between the drawing device 407 and the printer unit 403 or the server unit 402.

The invention is, of course, not limited to the embodiments shown above, but can be varied within the scope of the appended claims. For instance, the steps of the inventive method as described above may be performed at different locations, as will be described with three examples below. Note that these variations may also be combined.

In one embodiment the steps are performed in the pen and in a mail client in a personal computer. The mail client then receives a regular email. When the user chooses "handwritten reply" in a graphical interface, the client initiates a printer to print out the email, a position coding pattern and an address parameter. The pen generates an information sequence as a reply and records the address parameter. In principle, also the printed out incoming email message may be recorded by the pen (which in this case should be able to record text and detect positions simultaneously), or may be transmitted, via for instance a radio interface, to the pen. With this information at hand, the pen may create a regular email, store it and send it when a network connection has been established. Such a connection may be established by means of for instance a BLUETOOTH link between the drawing device and a PC, which is in turn connected to a network.

In another embodiment the combining of the address parameter and the information sequence may be performed in the mail client. Then when the client receives a regular email message this message is stored in the computer and an identity reference, corresponding to the email, is created. The message, the identity reference and a position coding pattern is printed out by a printer. The user generates an information sequence by writing a response message and records the identity reference. The generated information is transferred to the email client in the personal computer. The client according to the invention may operate not only in a PC, but also in a PDA, a mobile phone, the drawing device itself or in any other device. Subsequently, the client may create a message based on the received information sequence and send this as a response to the sender of the incoming message. In this embodiment the identity reference may be constituted by a particular domain of the position coding pattern. The user then does not need to specifically record an address parameter. Instead, the client may identify the reference identity, and hence the email that is responded to, simply by finding out which part of the position coding pattern that is used.

In yet another embodiment, steps may also be performed in an email server with which the email client communicates in a client-server mode and the server preferably is connected to the internet. The server then receives a regular email. This email is stored and a reference identity, corresponding to the email is created. The email and the reference identity are sent to the email client which operates in a personal computer. The email client instructs a printer to printout the incoming email message, the reference identity and a position coding pattern on a sheet of paper. As in the previous embodiment, the client then receives the reference identity as well as the position data that constitutes an information sequence. The reference identity and the information sequence are passed on to the server that generates a regular email message and sends it to a recipient that corresponds to the reference identity. Also in this embodiment the position coding pattern may constitute a reference identity. The server then instructs the email client as to which part (domain) of the position coding pattern that should be used when the sheet of paper is printed. The server may then derive the reference identity from the information sequence that includes position data. Position data from a certain domain of the global position coding pattern corresponds to a certain reference identity and hence to a particular recipient. In principle, the email client receiving the information sequence from the pen need then not be the same as the email client, that initiated the printout of the sheet of paper. The above mentioned email server may register the used domain of the position coding pattern, in a global pattern lookup server (GPLS), as associated with a message handled by the email server. An email client, receiving position data from a pen, may thus look up the relevant email server in the GPLS and subsequently route the position data/information sequence to this email server.

## Claims

1. A method for generating a message that is intended to be sent to a destination, comprising the steps of
- sending (201) an address parameter (111; 302; 303; 304; 408), that corresponds to the destination, to a printer unit (108; 403),
- printing out (202) a sheet of paper (109; 301; 404) using the printer unit (108; 403), which sheet of paper (109; 301; 404) comprises a position-coding pattern (110) and said address parameter (111; 302; 303; 304; 408),
- generating (203) an information sequence (112) by writing on the sheet of paper (109; 301; 404) with a drawing device (107; 407), which drawing device (107; 407) is capable of detecting positions on the sheet of paper (109; 301; 404) by reading the position-coding pattern (110),
**characterized by** the method further comprising the steps of
- recording (204) the address parameter (111; 302; 303; 304; 408) using the drawing device (107; 407), and
- combining (205) the recorded address parameter (111; 302; 303; 304; 408) with the informations sequence (112) into a message.

2. A method according to claim 1, in which the address parameter (111; 302; 303; 304; 408) comprises at least information corresponding to an address in an e-mail system.

3. A method according to claim 1, in which the address parameter (111; 312; 303; 304; 408) comprises at least a reference identity that identifies an address in a server unit.

4. A method according to any one of the preceding claims, in which the message is a reply to an incoming message and in which the address parameter (111; 302; 303; 304; 408) corresponds to the address of at least the sender of the incoming message.

5. A method according to claim 4, in which information in the incoming message is also printed out on the sheet of paper (109; 301; 404).

6. A method according to claim 5, in which the positional relationship on the sheet of paper (109; 301; 404) between the information in the incoming message and the information sequence (112) is recorded and in which the information in the incoming message is included in the generated message with said positional relationship retained.

7. A method according to any one of the preceding claims, in which the message is intended to be sent to a user-defined subset of a group of recipients and in which the identities of this group of recipients are printed out on the sheet of paper (109; 301; 404).

8. A method according to any one of the preceding claims, in which the recorded address information and the information sequence (112) are combined in the drawing device (107; 407).

9. A method according to claim 8, in which a number of such messages are stored in the drawing device (107; 407) and subsequently sent, when the drawing device (107; 407) makes contact with a network.

10. A method according to any one of claims 1-7, in which the recorded address information and the information sequence (112) are transmitted from the drawing device (107; 407) to a server unit and in which the address information and the information sequence (112) are combined in the server unit.

11. A device for communication with a mail server (104) located in any domain on the Internet (103),
an electronic mail client program being installed on said device (102) and
said device (102) being connected to a network communications interface to the Internet (103), a printer unit (108) and an electronic display (105),
said electronic mail client program comprising the instruction: to display on the electronic display (105), upon receipt of an incoming electronic mail message from the mail server (104), the incoming electronic mail message;
**characterized by** the electronic mail client program further comprising the instructions: to display on the electronic display (105) an option for generating, based on the incoming electronic mail message, an electronic reply message including handwritten information;
and upon detection of a selection of said option, to send an address parameter (111; 302; 303; 304), that corresponds to the Internet mail address of the sender of the incoming electronic mail message, to a printer unit (108),
the printer unit (108) thereby being controlled to print out a sheet of paper (109; 301) comprising a position-coding pattern (110) and said address parameter (111; 302; 303; 304),
an information sequence (112) being intended to be generated by writing on the sheet of paper (109; 301) with a drawing device (107),
which drawing device (107) is capable of detecting positions on the sheet of paper (109; 301) by reading the position-coding pattern (110),
the address parameter (111; 302; 303; 304) being intended to be recorded using the drawing device (107),
and the recorded address parameter being intended to be combined with the information sequence (112) to form said electronic reply message including handwritten information.

12. The device according to claim 11, wherein the electronic mail client program further comprises the instruction to combine the information sequence (112) and the address parameter (111; 302; 303; 304), upon receipt thereof from the drawing device (107), to form said electronic reply message including handwritten information.

13. The device according to claim 12, wherein the electronic mail client program further comprises the instruction to send contents of the incoming electronic mail message to the printer unit (108), the printer unit (108) thereby being controlled to also print out said contents on the sheet of paper (109; 301)

14. The device according to claim 13, wherein the electronic mail client program further comprises the instructions to store said contents of the incoming electronic mail message in a memory associated with said device (102), and to retrieve, upon said receipt of the information sequence (112) and the address parameter (111; 302; 303; 304) from the drawing device (107), said contents from the memory and combine said contents and the information sequence (112) and the address parameter (111; 302; 303; 304) to form said electronic reply message including handwritten information.

15. The device according to claim 14, wherein the electronic mail client program further comprises the instructions to associate the position-coding pattern (110) with said contents of the incoming electronic mail message, to thereby control the printer unit (108) to print out said contents in a given positional relationship to said position-coding pattern (110), and to combine said contents and the information sequence (112) with said positional relationship retained.

16. The device according to claim 11, wherein the electronic mail client program further comprises the instruction to extract the address parameter (111; 302; 303; 304) from the incoming electronic mail message as received from the mail server (104).

17. The device according to claim 16, wherein the electronic mail client program further comprises the instruction to send the information sequence (112) and the address parameter (111; 302; 303; 304), upon receipt thereof, to the mail server (104).

18. The device according to claim 16 or 17, wherein the electronic mail client program further comprises the instruction to send contents of the incoming electronic mail message to the printer unit (108), the printer unit (108) thereby being controlled to also print out said contents on the sheet of paper (109).

19. The device according to claim 18, wherein the electronic mail client program further comprises the instructions to associate said position-coding pattern (110) with said contents of the incoming electronic mail message, to thereby control the printer unit (108) to print out said contents in a given positional relationship to said position-coding pattern (110), so that said information sequence (112) is generated with said given positional relationship to said contents, and to send the information sequence to the mail server (104) with said positional relationship retained.

20. The device according to any one of claims 12-19, wherein the address parameter (111; 304) is a reference identity of the position-coding pattern (110) to be printed on said the sheet of paper (109).

21. The device according to claim 20, wherein the reference identity corresponds to a range of positions coded by the position-coding pattern (110) to be printed on the sheet of paper (109).

22. The device according to any one of claims 12-19, wherein the address parameter (111; 302; 303; 304) is a reference identity that identifies said Internet mail address in the device (102) or in the mail server (104).

23. The device according to claim 11, wherein the electronic mail client program further comprises the instruction to transmit contents of the incoming electronic mail message to the drawing device (107).

24. The device according to claim 23, wherein the instruction to transmit comprises to send said contents to the printer unit (108), the printer unit (108) thereby being controlled to also print out said contents on the sheet of paper (109) in a format that the drawing device (107) is capable of reading.

25. The device according to any of claims 11-24, wherein the address parameter (111; 302; 303; 304) comprises said Internet mail address.

26. The device according to claim 25, wherein the printer unit (108) is controlled to write said Internet mail address in plain language on the sheet of paper (109).

27. The device according to claim 25, wherein the printer unit (108) is controlled to code said Internet mail address on said sheet of paper (109) in a format that the drawing device (107) is capable of reading.

## Patentansprüche

1. Verfahren zum Erzeugen einer Nachricht, die zu einem Ziel gesendet werden soll, mit den folgenden Schritten:
- Senden (201) eines Adressenparameters (111; 302; 303; 304; 408), der dem Ziel entspricht, zu einer Druckereinheit (108; 403),
- Ausdrucken (202) eines Blatt Papiers (109; 301; 404) unter Verwendung der Druckereinheit (108; 403), wobei das Blatt Papier (109; 301; 404) ein Positionscodierungsmuster (110) und den Adressenparameter (111; 302; 303; 304; 408) umfasst,
- Erzeugen (203) einer Informationssequenz (112) durch Schreiben auf dem Blatt Papier (109; 301; 404) mit einer Zeicheneinrichtung (107; 407),
wobei die Zeicheneinrichtung (107; 407) Positionen auf dem Blatt Papier (109; 301; 404) durch Lesen des Positionscodierungsmusters (110) detektieren kann,
**dadurch gekennzeichnet, dass** das Verfahren ferner die folgenden Schritte umfasst:
- Aufzeichnen (204) des Adressenparameters (111; 302; 303; 304; 408) unter Verwendung der Zeicheneinrichtung (107; 407) und
- Kombinieren (205) des aufgezeichneten Adressenparameters (111; 302; 303; 304; 408) mit der Informationssequenz (112) zu einer Nachricht.

2. Verfahren nach Anspruch 1, bei dem der Adressenparameter (111; 302; 303; 304; 408) mindestens eine Adresse in einem Email-System entsprechende Informationen umfasst.

3. Verfahren nach Anspruch 1, bei dem der Adressenparameter (111; 302; 303; 304; 408) mindestes eine Referenzidentität umfasst, die eine Adresse in einer Server-Einheit identifiziert.

4. Verfahren nach einem der vorhergehenden Ansprüche, bei dem die Nachricht eine Antwort auf eine ankommende Nachricht ist und bei dem der Adressenparameter (111; 302; 303; 304; 408) der Adresse mindestes des Absenders der ankommenden Nachricht entspricht.

5. Verfahren nach Anspruch 4, bei dem Informationen in der ankommenden Nachricht auch auf dem Blatt Papier (109; 301; 404) ausgedruckt werden.

6. Verfahren nach Anspruch 5, bei dem die Positionsbeziehung des Blatts Papier (109; 301; 404) zwischen den Informationen in der ankommenden Nachricht und der Informationssequenz (112) aufgezeichnet wird und bei dem die Informationen in der ankommenden Nachricht unter Beibehaltung der Positionsbeziehung in die erzeugte Nachricht aufgenommen werden.

7. Verfahren nach einem der vorhergehenden Ansprüche, bei dem die Nachricht zu einer benutzerdefinierten Teilmenge einer Gruppe von Empfängern gesendet werden soll und bei dem die Identitäten dieser Gruppe von Empfängern auf dem Blatt Papier (109; 301; 404) ausgedruckt werden.

8. Verfahren nach einem der vorhergehenden Ansprüche, bei dem die aufgezeichneten Adresseninformationen und die Informationssequenz (112) in der Zeicheneinrichtung (107; 407) kombiniert werden.

9. Verfahren nach Anspruch 8, bei dem mehrere solche Nachrichten in der Zeicheneinrichtung (107; 407) gespeichert und nachfolgend gesendet werden, wenn die Zeicheneinrichtung (107; 407) mit einem Netzwerk in Kontakt kommt.

10. Verfahren nach einem der Ansprüche 1-7, bei dem die aufgezeichneten Adresseninformationen und die Informationssequenz (112) von der Zeicheneinrichtung (107; 407) zu einer Server-Einheit übertragen werden und bei dem die Adresseninformationen und die Informationssequenz (112) in der Server-Einheit kombiniert werden.

11. Einrichtung zur Kommunikation mit einem Mail-Server (104), der sich in einer beliebigen Domäne im Internet (103) befindet,
wobei auf der Einrichtung (102) ein Email-Client-Programm installiert ist und
die Einrichtung (102) mit einer Netzwerkkommunikationsschnittstelle zum Internet (103), einer Druckereinheit (108) und einem elektronischen Display (105) verbunden ist,
wobei das Email-Client-Programm die folgende Anweisung umfasst: beim Empfang einer ankommenden Email-Nachricht von dem Mail-Server (104) Anzeigen der ankommenden Email-Nachricht auf dem elektronischen Display (105);
**dadurch gekennzeichnet, dass** das Email-Client-Programm ferner die folgenden Anweisungen umfasst: Anzeigen einer Option zum Erzeugen einer handschriftliche Informationen enthaltenden elektronischen Antwortnachricht auf der Basis der ankommenden Email-Nachricht auf dem elektronischen Display (105);
und bei Detektion einer Auswahl der Option Senden eines Adressenparameters (111; 302; 303; 304), der der Internet-Mail-Adresse des Absenders der ankommenden Email-Nachricht entspricht, zu einer Druckereinheit (108),
wobei die Druckereinheit (108) **dadurch** so gesteuert wird, dass sie ein Blatt Papier (109; 301) ausdruckt, das ein Positionscodierungsmuster (110) und den Adressenparameter (111; 302; 303; 304) umfasst,
wobei durch Schreiben auf dem Blatt Papier (109; 301) mit einer Zeicheneinrichtung (107) eine Informationssequenz (112) erzeugt werden soll,
wobei die Zeicheneinrichtung (107) durch Lesen des Positionscodierungsmusters (110) Positionen auf dem Blatt Papier (109; 301) detektieren kann,
wobei der Adressenparameter (111; 302; 303; 304) unter Verwendung der Zeicheneinrichtung (107) aufgezeichnet werden soll,
und der aufgezeichnete Adressenparameter mit der Informationssequenz (112) kombiniert werden soll, um die handschriftliche Informationen enthaltende elektronische Antwortnachricht zu bilden.

12. Einrichtung nach Anspruch 11, wobei das Email-Client-Programm ferner die Anweisung umfasst, die Informationssequenz (112) und den Adressenparameter (111; 302; 303; 304) beim Empfang dieser von der Zeicheneinrichtung (107) zu kombinieren, um die handschriftliche Informationen enthaltende elektronische Antwortnachricht zu bilden.

13. Einrichtung nach Anspruch 12, wobei das Email-Client-Programm ferner die Anweisung umfasst, Inhalte der ankommenden Email-Nachricht zu der Druckereinheit (108) zu senden, wobei die Druckereinheit (108) **dadurch** so gesteuert wird, dass sie auch die Inhalte auf dem Blatt Papier (109; 301) ausdruckt.

14. Einrichtung nach Anspruch 13, wobei das Email-Client-Programm ferner die Anweisungen umfasst, die Inhalte der ankommenden Email-Nachricht in einem mit der Einrichtung (102) assoziierten Speicher zu speichern und beim Empfang der Informationssequenz (112) und des Adressenparameters (111; 302; 303; 304) von der Zeicheneinrichtung (107) die abzurufen Inhalte aus dem Speicher, und die Inhalte und die Informationssequenz (112) und den Adressenparameter (111; 302; 303; 304) zu kombinieren, um die handschriftliche Informationen enthaltende elektronische Antwortnachricht zu bilden.

15. Einrichtung nach Anspruch 14, wobei das Email-Client-Programm ferner die Anweisungen umfasst, das Positionscodierungsmuster (110) mit den Inhalten der ankommenden Email-Nachricht zu assoziieren, um **dadurch** die Druckereinheit (108) so zu steuern, dass sie die Inhalte in einer gegebenen Positionsbeziehung zu dem Positionscodierungsmuster (110) ausdruckt, und die Inhalte und die Informationssequenz (112) unter Beibehaltung der Positionsbeziehung zu kombinieren.

16. Einrichtung nach Anspruch 11, wobei das Email-Client-Programm ferner die Anweisung umfasst, den Adressenparameter (111; 302; 303; 304) aus der von dem Mail-Server (104) empfangenen ankommenden Email-Nachricht zu extrahieren.

17. Einrichtung nach Anspruch 16, wobei das Email-Client-Programm ferner die Anweisung umfasst, die Informationssequenz (112) und den Adressenparameter (111; 302; 303; 304) beim Empfang dieser zu dem Mail-Server (104) zu senden.

18. Einrichtung nach Anspruch 16 oder 17, wobei das Email-Client-Programm ferner die Anweisung umfasst, Inhalte der ankommenden Email-Nachricht zu der Druckereinheit (108) zu senden, wobei die Druckereinheit (108) **dadurch** so gesteuert wird, dass sie auch die Inhalte auf dem Blatt Papier (109) ausdruckt.

19. Einrichtung nach Anspruch 18, wobei das Email-Client-Programm ferner die Anweisungen umfasst, das Positionscodierungsmuster (110) mit den Inhalten der ankommenden Email-Nachricht zu assoziieren, um **dadurch** die Druckereinheit (108) so zu steuern, dass sie die Inhalte in einer gegebenen Positionsbeziehung zu dem Positionscodierungsmuster (110) ausdruckt, so dass die Informationssequenz (112) mit der gegebenen Positionsbeziehung zu den Inhalten erzeugt wird, und die Informationssequenz unter Beibehaltung der Positionsbeziehung zu dem Mail-Server (104) zu senden.

20. Einrichtung nach einem der Ansprüche 12-19, wobei der Adressenparameter (111; 304) eine Referenzidentität des auf dem Blatt Papier (109) auszudruckenden Positionscodierungsmusters (110) ist.

21. Einrichtung nach Anspruch 20, wobei die Referenzidentität einem Bereich von Positionen entspricht, die durch das auf dem Blatt Papier (109) auszudruckende Positionscodierungsmuster (110) codiert werden.

22. Einrichtung nach einem der Ansprüche 12-19, wobei der Adressenparameter (111; 302; 303; 304) eine Referenzidentität ist, die die Internet-Mail-Adresse in der Einrichtung (102) oder in dem Mail-Server (104) identifiziert.

23. Einrichtung nach Anspruch 11, wobei das Email-Client-Programm ferner die Anweisung umfasst, Inhalte der ankommenden Email-Nachricht zu der Zeicheneinrichtung (107) zu übertragen.

24. Einrichtung nach Anspruch 23, wobei die Anweisung zum Übertragen umfasst, die Inhalte zu der Druckereinheit (108) zu senden, wobei die Druckereinheit (108) **dadurch** so gesteuert wird, dass sie auch die Inhalte auf dem Blatt Papier (109) in einem Format ausdruckt, das die Zeicheneinrichtung (107) lesen kann.

25. Einrichtung nach einem der Ansprüche 11-24, wobei der Adressenparameter (111; 302; 303; 304) die Internet-Mail-Adresse umfasst.

26. Einrichtung nach Anspruch 25, wobei die Druckereinheit (108) so gesteuert wird, dass sie die Internet-Mail-Adresse in natürlicher Sprache auf dem Blatt Papier (109) schreibt.

27. Einrichtung nach Anspruch 25, wobei die Druckereinheit (108) so gesteuert wird, dass sie die Internet-Mail-Adresse auf dem Blatt Papier (109) in einem Format codiert, das die Zeicheneinrichtung (107) lesen kann.

## Revendications

1. Procédé permettant de générer un message qui est destiné à être envoyé à une destination, comprenant les étapes consistant à :
- envoyer (201) un paramètre d'adresse (111 ; 302; 303 ; 304 ; 408), qui correspond à la destination, à une unité d'impression (108 ; 403),
- imprimer (202) sur une feuille de papier (109 ; 301 ; 404) en utilisant l'unité d'impression (108 ; 403), la feuille de papier (109 ; 301 ; 404) comprenant un motif de codage de position (110) et ledit paramètre d'adresse (111 ; 302 ; 303 ; 304 ; 408),
- générer (203) une séquence d'informations (112) en écrivant sur la feuille de papier (109 ; 301 ; 404) au moyen d'un dispositif de dessin (107 ; 407), le dispositif de dessin (107 ; 407) étant capable de détecter des positions sur la feuille de papier (109 ; 301 ; 404) en lisant le motif de codage de position (110),
**caractérisé par le fait que** le procédé comprend en outre les étapes consistant à
- enregistrer (204) le paramètre d'adresse (111 ; 302 ; 303 ; 304 ; 408) en utilisant le dispositif de dessin (107 ; 407) ; et
- combiner (205) le paramètre d'adresse enregistré (111 ; 302 ; 303; 304; 408) à la séquence d'informations (112) afin de former un message.

2. Procédé selon la revendication 1, dans lequel le paramètre d'adresse (111 ; 302 ; 303 ; 304 ; 408) comprend au moins une information correspondant à une adresse dans un système de courrier électronique.

3. Procédé selon la revendication 1, dans lequel le paramètre d'adresse (111 ; 302 ; 303 ; 304 ; 408) comprend au moins une identité de référence qui identifie une adresse dans une unité formant serveur.

4. Procédé selon l'une quelconque des revendications précédentes, dans lequel le message est une réponse à un message entrant et dans lequel le paramètre d'adresse (111 ; 302 ; 303; 304; 408) correspond à l'adresse d'au moins l'émetteur du message entrant.

5. Procédé selon la revendication 4, dans lequel l'information contenue dans le message entrant est également imprimée sur la feuille de papier (109; 301 ; 404).

6. Procédé selon la revendication 5, dans lequel la relation de position, sur la feuille de papier (109 ; 301 ; 404), entre l'information contenue dans le message entrant et la séquence d'informations (112) est enregistrée, et dans lequel l'information contenue dans le message entrant est incluse dans le message généré en conservant ladite relation de position.

7. Procédé selon l'une quelconque des revendications précédentes, dans lequel le message est destiné à être envoyé à un sous-ensemble défini par l'utilisateur d'un groupe de destinataires et dans lequel les identités de ce groupe de destinataires sont imprimées sur la feuille de papier (109 ; 301 ; 404).

8. Procédé selon l'une quelconque des revendications précédentes, dans lequel l'information d'adresse enregistrée et la séquence d'informations (112) sont combinées dans le dispositif de dessin (107 ; 407).

9. Procédé selon la revendication 8, dans lequel un certain nombre de ces messages sont stockés dans le dispositif de dessin (107 ; 407) puis envoyés lorsque le dispositif de dessin (107 ; 407) établit un contact avec un réseau.

10. Procédé selon l'une quelconque des revendications 1-7, dans lequel l'information d'adresse enregistrée et la séquence d'informations (112) sont transmises du dispositif de dessin (107 ; 407) à une unité formant serveur et dans lequel l'information d'adresse et la séquence d'informations (112) sont combinées dans l'unité formant serveur.

11. Dispositif destiné à communiquer avec un serveur de courrier électronique (104) situé dans un domaine quelconque sur l'Internet (103),
un programme client de courrier électronique étant installé sur ledit dispositif (102) et
ledit dispositif (102) étant connecté par une interface de communication de réseau à l'Internet (103), à une unité d'impression (108) et à un dispositif d'affichage électronique (105),
ledit programme client de courrier électronique comprenant l'instruction consistant à : d'afficher sur le dispositif d'affichage électronique (105), lors de la réception d'un message de courrier électronique entrant en provenance du serveur de courrier (104), le message de courrier électronique entrant;
**caractérisé par le fait que** le programme client de courrier électronique comprend en outre les instructions consistant à : afficher sur le dispositif d'affichage électronique (105) une option permettant de générer, sur la base du message de courrier électronique entrant, un message de réponse électronique comprenant des informations manuscrites;
et, lors de la détection d'une sélection de ladite option, à envoyer un paramètre d'adresse (111 ; 302 ; 303; 304), qui correspond à l'adresse de courrier Internet de l'émetteur du message de courrier électronique entrant, à une unité d'impression (108),
- l'unité d'impression (108) étant ainsi commandée pour imprimer sur une feuille de papier (109 ; 301) comprenant un motif de codage de position (110) et ledit paramètre d'adresse (111 ; 302 ; 303 ; 304),
- une séquence d'informations (112) étant destinée à être générée par écriture sur la feuille de papier (109 ; 301) au moyen d'un dispositif de dessin (107),
lequel dispositif de dessin (107) est capable de détecter des positions sur la feuille de papier (109 ; 301) par lecture du motif de codage de position (110),
le paramètre d'adresse (111 ; 302 ; 303 ; 304) étant destiné à être enregistré au moyen du dispositif de dessin (107), et
le paramètre d'adresse enregistré étant destiné à être combiné à la séquence d'informations (112) afin de former ledit message de réponse électronique comprenant des informations manuscrites.

12. Dispositif selon la revendication 11, dans lequel le programme client de courrier électronique comprend en outre l'instruction consistant à combiner la séquence d'informations (112) au paramètre d'adresse (111 ; 302 ; 303 ; 304), lors de sa réception en provenance du dispositif de dessin (107), afin de former ledit message de réponse électronique comprenant des informations manuscrites.

13. Dispositif selon la revendication 12, dans lequel le programme client de courrier électronique comprend en outre l'instruction consistant à envoyer le contenu du message de courrier électronique entrant à l'unité d'impression (108), l'unité d'impression (108) étant ainsi commandée pour imprimer également ledit contenu sur la feuille de papier (109 ; 301).

14. Dispositif selon la revendication 13, dans lequel le programme client de courrier électronique comprend en outre les instructions consistant à stocker ledit contenu du message de courrier électronique entrant dans une mémoire associée audit dispositif (102), et à extraire, lors de ladite réception de la séquence d'informations (112) et du paramètre d'adresse (111 ; 302 ; 303 ; 304) en provenance du dispositif de dessin (107), ledit contenu de la mémoire et à combiner ledit contenu et la séquence d'informations (112) au paramètre d'adresse (111 ; 302 ; 303 ; 304) afin de former ledit message de réponse électronique comprenant des informations manuscrites.

15. Dispositif selon la revendication 14, dans lequel le programme client de courrier électronique comprend en outre les instructions consistant à associer le motif de codage de position (110) audit contenu du message de courrier électronique entrant, pour ainsi commander l'unité d'impression (108) afin d'imprimer ledit contenu selon une relation de position donnée par rapport audit motif de codage de position (110), et à combiner ledit contenu et ladite séquence d'informations (112) en conservant ladite relation de position.

16. Dispositif selon la revendication 11, dans lequel le programme client de courrier électronique comprend en outre l'instruction consistant à extraire le paramètre d'adresse (111 ; 302 ; 303 ; 304) du message de courrier électronique entrant tel qu'il est reçu du serveur de courrier (104).

17. Dispositif selon la revendication 16, dans lequel le programme client de courrier électronique comprend en outre l'instruction consistant à envoyer la séquence d'informations (112) et le paramètre d'adresse (111 ; 302 ; 303 ; 304), lors de sa réception, au serveur de courrier (104).

18. Dispositif selon la revendication 16 ou 17, dans lequel le programme client de courrier électronique comprend en outre l'instruction consistant à envoyer le contenu du message de courrier électronique entrant à l'unité d'impression (108), l'unité d'impression (108) étant alors commandée pour imprimer également ledit contenu sur la feuille de papier (109).

19. Dispositif selon la revendication 18, dans lequel le programme client de courrier électronique comprend en outre les instructions consistant à associer ledit motif de codage de position (110) audit contenu du message de courrier électronique entrant, pour ainsi commander l'unité d'impression (108) afin qu'elle imprime ledit contenu selon une relation de position donnée par rapport audit motif de codage de position (110), afin que ladite séquence d'information (112) soit générée avec ladite relation de position donnée par rapport audit contenu, et à envoyer la séquence d'informations au serveur de courrier (104) en conservant ladite relation de position.

20. Dispositif selon l'une quelconque des revendications 12 à 19, dans lequel le paramètre d'adresse (111 ; 304) est une identité de référence du motif de codage de position (110) devant être imprimé sur ladite feuille de papier (109).

21. Dispositif selon la revendication 20, dans lequel l'identité de référence correspond à une gamme de positions codées par le motif de codage de position (110) devant être imprimé sur la feuille de papier (109) .

22. Dispositif selon l'une quelconque des revendications 12 à 19, dans lequel le paramètre d'adresse (111 ; 302 ; 303 ; 304) est une identité de référence qui identifie ladite adresse de courrier électronique dans le dispositif (102) ou dans le serveur de courrier (104).

23. Dispositif selon la revendication 11, dans lequel le programme client de courrier électronique comprend en outre l'instruction consistant à transmettre le contenu du message de courrier électronique entrant au dispositif de dessin (107).

24. Dispositif selon la revendication 23, dans lequel l'instruction de transmission consiste à envoyer ledit contenu à l'unité d'impression (108), l'unité d'impression (108) étant ainsi commandée pour imprimer également ledit contenu sur la feuille de papier (109) dans un format que le dispositif de dessin (107) est capable de lire.

25. Dispositif selon l'une quelconque des revendications 11 à 24, dans lequel le paramètre d'adresse (111 ; 302 ; 303 ; 304) comprend ladite adresse de courrier Internet.

26. Dispositif selon la revendication 25, dans lequel l'unité d'impression (108) est commandée de façon à écrire ladite adresse de courrier Internet en langage clair sur la feuille de papier (109).

27. Dispositif selon la revendication 25, dans lequel l'unité d'impression (108) est commandée de façon à coder ladite adresse de courrier Internet sur ladite feuille de papier (109) dans un format que le dispositif de dessin (107) est capable de lire.
